# FASCICULE DE BREVET EUROPEEN

(11) **EP 2 900 534 B1**
(45) Date de publication et mention de la délivrance du brevet: **22.07.2020**
(21) Numéro de dépôt: 13802047.4
(22) Date de dépôt: 09.12.2013
(51) Int. Cl.: B61B 1/02, G09F 9/00

(54) **STRUCTURE D'AFFICHAGE D'INFORMATIONS, BARRIERE ET STATION D'ARRET DE VEHICULES AINSI EQUIPEES**
INFORMATIONSANZEIGESTRUKTUR SOWIE FAHRZEUGSTATION UND BARRIERE MIT DIESER STRUKTUR
INFORMATION DISPLAY STRUCTURE, AND VEHICLE STATION AND BARRIER EQUIPPED WITH SAID STRUCTURE

(30) Priorité: 17.12.2012 FR 1262176
(43) Date de publication de la demande: 05.08.2015
(73) Titulaire: Faiveley Transport Tours, 37700 Saint Pierre des Corps (FR)
(72) Inventeur: LARDY, Gilles, Hong Kong (CN)
(74) Mandataire: Novagraaf Technologies
(86) Numéro de dépôt international: PCT/EP2013/075891
(87) Numéro de publication internationale: WO 2014/095443

(56) Documents cités:
- EP-A1- 2 117 901
- WO-A1-2006/131018
- WO-A2-2011/059793
- DE-A1- 10 332 012
- JP-A- H05 266 396
- JP-A- 2001 233 201
- JP-A- 2010 008 528
- KR-A- 20010 083 025
- KR-A- 20080 097 048
- KR-U- 20110 000 114
- US-A1- 2011 134 356

## Description

La présente invention concerne :
- d'abord une structure d'affichage d'informations comprenant :
   * une partie fixe à fixer dressée sur ou contre un support,
   * des moyens de fixation de la partie fixe, et,
   * au moins un écran d'affichage d'informations lié à la partie fixe et s'étendant localement devant elle, ledit écran présentant une face avant d'affichage visible,
- et plus particulièrement une barrière allongée, dressée sur ledit support, lequel est horizontal, tel un quai de station où passe un véhicule de transport (en particulier un véhicule ferroviaire de transport des passagers), la barrière s'élevant entre un côté avant accessible et un côté arrière non accessible et comprenant, sur sa longueur, notamment plusieurs structures d'affichage d'informations du type ci-avant,
- et encore une station où passe ledit véhicule de transport, la station ayant un quai et présentant des accès au quai pour des passagers souhaitant accéder au véhicule, en station, chaque accès s'étendant suivant un axe, la station comprenant, le long du quai, plusieurs structures d'affichage d'informations.

On aura compris que la structure d'affichage d'informations citée en premier est une structure du type général que l'on voit dans les gares, stations de métro et aéroports pour afficher notamment des messages publicitaires, sur leurs dalles d'affichage de 40 pouces et plus (42 pouces, 70 pouces...) .

Un problème est lié à l'entretien et à l'implantation de ces structures.

On connaît de US 2011 134 356, JP 2010 008528, DE 103 32 012, JP H05 266 396 et WO 2006 131 018 des structures électroniques d'affichage pouvant être disposées sur un quai cependant ces structures ne permettent pas d'accéder à l'arrière de l'écran pour la maintenance.

Une solution proposée est que des moyens de mobilité soient interposés entre la partie fixe et l'écran d'affichage, prévue à l'avant de l'écran d'affichage, pour permettre un mouvement de l'écran d'affichage, par rapport à la partie fixe entre :
- une position fermée de l'écran d'affichage, devant ou contre ladite partie fixe, cette position fermée étant la position opérationnelle de fonctionnement où ledit écran de la face avant d'affichage est visible devant la structure,
- et une position ouverte de l'écran d'affichage autorisant un accès pour maintenance :
   * derrière l'écran d'affichage,
   * ou à une face arrière de ladite façade.

Favorablement, une serrure ou verrou sécurisera la position fermée.

En particulier, si la structure d'affichage précitée doit être intégrée à une barrière de protection/interdiction, pleine sauf à l'endroit de porte(s) mobile(s), telle une barrière de quai de station de métro ou train (alors souvent appelée barrière avec porte (s)-palière) ou par exemple une barrière de hall d'aéroport séparant la zone publique d'une zone d'arrivée de vols, il peut y avoir intérêt à ce que l'effet barrière soit en permanence effectif.

Il est alors conseillé que la partie fixe de la structure d'affichage comprenne :
- un bâti fixe, à fixer au support par certains au moins des moyens de fixation, et
- un bloc plein ou essentiellement plein, fixé au bâti fixe par des seconds moyens de fixation et fermant l'arrière de l'écran ou de la structure d'affichage, dans ladite position fermée.

Pour faciliter la fabrication, la mise en place et la maintenance, on recommande par ailleurs que tout ou partie de ce qui suit soit réalisé :
- le bloc plein et le bâti fixe comprennent, ensemble, a priori le long de la barrière, un panneau plein ou essentiellement plein et un cadre qui l'entoure au moins en partie, les moyens de mobilité étant interposés entre le cadre et l'écran d'affichage,
- la structure d'affichage comprend une structure périphérique mobile à laquelle est fixé l'écran d'affichage et qui, de préférence, porte une partie des moyens de mobilité,
- les moyens de mobilité comprennent des charnières disposées sur la hauteur, le long localement de la partie fixe et de l'un des côtés latéraux de ladite structure périphérique mobile,
- la structure d'affichage comprend des composants électriques ou électroniques de fonctionnement de l'écran d'affichage, lesquels sont, en partie au moins, avec l'écran d'affichage, liés avec ladite structure périphérique mobile, pour être mobile avec elle,
- la structure d'affichage comprend une vitre avant située devant l'écran d'affichage et liée à l'un ou l'autre, la vitre avant étant montée mobile avec l'écran d'affichage.

En alternative à ce qui précède, on propose aussi que la structure d'affichage :
- comprenne des composants électriques ou électroniques de fonctionnement de l'écran d'affichage, lesquels sont fixés à la partie fixe,
- et que l'écran d'affichage soit un écran tactile devant lequel une vitre de façade est mobile par rapport à la partie fixe, de préférence sans autre vitre devant l'écran.

Ainsi, l'ouverture de la vitre donnera accès aux composants, ou au moins à certains d'entre eux que l'on n'aura pas organisés pour qu'ils bougent avec la façade (a priori vitrée) mobile.

Concernant maintenant la barrière allongée évoquée plus haut et qui est équipée plusieurs structures d'affichage d'informations, on recommande qu'elle comprenne, sur sa longueur :
- au moins un vantail mobile de porte, pour ouvrir et fermer un passage, à cet endroit, entre les côtés avant accessible et arrière non accessible,
- au moins un bloc fixe auquel le vantail mobile de porte est relié mécaniquement et parallèlement auquel ledit vantail coulisse, le bloc fixe, qui est adjacent au vantail, renfermant un espace où est disposé l'un au moins des composants parmi : un moteur de motorisation du vantail mobile de porte, un dispositif d'entraînement du vantail interposé fonctionnellement entre le moteur et le vantail, un dispositif de verrouillage ou de déverrouillage du vantail en position ouverte ou fermée et une butée de fin course de coulissement du vantail mobile de porte,
- un bâti structurel fixe auquel appartient le, ou chaque, bloc fixe et qui est fixé à chaque partie fixe par les moyens de fixation de la partie fixe, et,
- des moyens de fixation du bâti structurel fixés dans le support, lesdites structures d'affichage d'informations étant, quant à elles, situées à l'écart du, ou de chaque vantail, et leurs faces avant d'affichage étant de préférence visible sur le côté avant accessible.

Chaque bloc fixe pourra être remplacé par, ou intégré avec, une porte de sécurité équipée d'un système à barre anti-panique et montée mobile sur un encadrement fixe, la porte de sécurité bordant latéralement le vantail mobile de porte qui coulissera alors parallèlement à elle. L'encadrement fixe appartiendra alors au bâti structurel.

Pour allier sécurité, maintenance pratique et informations, on a imaginé que le système à barre anti-panique soit lié fonctionnellement à des moyens de fixation libérable entre le bâti structurel et ladite partie fixe, laquelle sera alors définie par la porte de sécurité, de sorte que cette porte de sécurité puisse s'ouvrir, sous une poussée exercée sur la barre anti-panique, même en position verrouillée de moyens de verrouillage prévus pour verrouiller et déverrouiller sélectivement les moyens de fixation libérable. On prévoit par ailleurs que l'une au moins des structures d'affichage d'informations soit fixée à l'une au moins des portes de sécurité.

Sur ces barrières, le bâti structurel fixe sera très favorablement pourvu de vitres transparentes (fixes), à l'écart des zones ou seront montées les structures d'affichage.

Ainsi, notamment dans ce cas :
- les zones d'affichage n'interféreront pas avec les zones de transit des personnes passant par les vantaux de porte,
- et, sur le quai ou par exemple le hall où se dressera la barrière, les personnes présentes pourront avoir aisément et en sécurité accès auxdites informations affichées sur les structures d'affichage sans perdre de vue leur environnement : arrivée d'un train en station ou d'une personne dans le hall d'arrivée de l'aéroport....

On conseille par ailleurs que, sur la longueur, le bâti structurel de la barrière comprenne des montants latéraux dressés, entre deux desquels est interposée au moins une dite structure d'affichage, un dit écran d'affichage, ou cet écran d'affichage et ladite façade, avec, de préférence des vitres transparentes se dressant entre d'autres paires montants latéraux, de part et d'autre d'une dite structure d'affichage.

On conseille encore que, par sécurité, la façade d'affichage d'informations comprenne, devant l'écran d'affichage, au moins un panneau vitré à travers lequel on verra les informations.

On recommande aussi que soient prévus, le long de la barrière dressée sur le support, des câbles d'alimentation électrique connectés auxdits écrans d'affichage et/ou à l'un au moins desdits composants, les câbles passant dans le support, à l'écart de chaque vantail et bloc fixe ou porte de sécurité (ou, dans ce dernier cas, dans le montant creux du cadre où passe l'axe de pivotement, dès lors qu'il s'agit là d'une zone qui demeure fixe quand la porte pivote).

Ainsi, on facilitera les raccordements électriques, en rendant aisées les implantations, sans nécessité d'un raccordement centralisé sur la barrière.

On conseille encore que, par sécurité et pour une bonne gestion des flux de personnes dans l'environnement des barrières :
- le ou chaque bloc fixe présente, le long de la barrière, une surface libre adjacente audit espace pour loger les composants, et qui pourrait être vitrée et transparente, et que la face avant d'affichage de certains au moins des écrans d'affichage d'informations soit alors plus importante que ladite surface libre, de sorte que les écrans d'affichage soient implantés à l'écart du ou des blocs fixes et/ou que :
- chaque barrière occupe toute la longueur d'un quai de station où passe un véhicule de transport et comprenne:
- deux premiers ensembles de premiers et seconds blocs fixes s'étendant le long de la barrière, et
- deux seconds ensembles de premiers et seconds vantaux mobiles de porte,
- avec les écrans d'affichage répartis :
   * pour certains, en groupe d'écrans disposés côte à côte, vers la partie centrale de la longueur du quai, entre les deux seconds ensembles de premiers et seconds vantaux mobiles de portes,
   * pour d'autres, disposés individuellement, plus latéralement le long du quai.

Au moins dans ce cas, on recommande aussi que le groupe d'écrans disposés côte à côte, vers la partie centrale de la longueur du quai présente, suivant la longueur de la barrière, une longueur supérieure à la longueur de chaque second ensemble.

Pour limiter les coûts sans altérer la sécurité et simplifier la maintenance, il est conseillé par ailleurs que devant chaque écran d'affichage, le long de la barrière, la structure d'affichage comprend une seule vitre dans le sens de son épaisseur.

Concernant maintenant la station de passage de véhicules de transport et qui possède un quai et présente des accès au quai pour des passagers souhaitant accéder au véhicule, en station, chaque accès s'étendant suivant un axe, on recommande ce qui suit, comme implantation :
- la station comprendra, le long du quai, plusieurs structures d'affichage d'informations du type ci-avant ou une dite barrière, les écrans d'affichage étant répartis :
   * pour certains, en groupe d'écrans disposés côte à côte, vers la partie centrale de la longueur du quai, entre deux groupes de vantaux mobiles et blocs fixes,
   * pour d'autres, disposés individuellement, plus latéralement le long du quai, le(s) groupe(s) d'écrans disposés côte à côte étant décalés latéralement par rapport à l'axe de chaque accès.

La encore, la sécurité et une bonne gestion des flux de personnes dans l'environnement des barrières seront ainsi favorisées.

Selon un autre aspect, on recommande par ailleurs qu'en station les écrans d'affichage puissent, de préférence, être répartis :
- pour des premiers, en groupe d'écrans disposés côte à côte, vers la partie centrale de la longueur du quai, entre deux groupes de vantaux mobiles,
- pour des seconds, disposés individuellement, plus latéralement le long du quai que les premiers, les structures d'affichage pourvues de ces seconds écrans d'affichage étant en outre pourvues de moyens de fonctionnement interactifs connectés à des moyens de traitement situés à distance, pour autoriser une interactivité homme-machine permettant à un utilisateur situé devant l'un de ces seconds écrans à transmettre une demande vers les moyens de traitement, via les moyens de fonctionnement interactifs, et obtenir un retour d'informations sur lesdits seconds écrans d'affichage.

D'autres caractéristiques et avantages de l'invention ressortiront si nécessaire encore de la description qui en est faite ci-après, à titre indicatif et nullement limitatif, en référence aux dessins annexés dans lesquels :
- les figures 1 et 2 sont des vues en perspective d'une structure d'affichage inventive selon respectivement une première et seconde réalisations, ouvertes ;
- les figures 3, 4 montrent une telle structure d'affichage respectivement fermée et en vue éclatée ;
- la figure 5 montre la structure d'affichage de la figure 4 de 3/4 avant, assemblée et ouverte ;
- la figure 6 montre une station, par exemple de métro, dont le quai est pourvu d'une barrière équipée de structures d'affichage ;
- la figure 7 montre le détail VII de la figure 6 ;
- les figures 8, 9 montrent respectivement de devant et derrière, fermée, une première réalisation de porte-palière pouvant appartenir à une barrière de quai imaginée ici,
- la figure 10 montre de derrière, fermée, une seconde réalisation de porte-palière pouvant appartenir à une barrière de quai imaginée ici, et
- la figure 11 montre une vue de ce qui peut être le côté avant de l'une porte de sécurité de la figure 10 et une alternative à la solution de la figure 2.

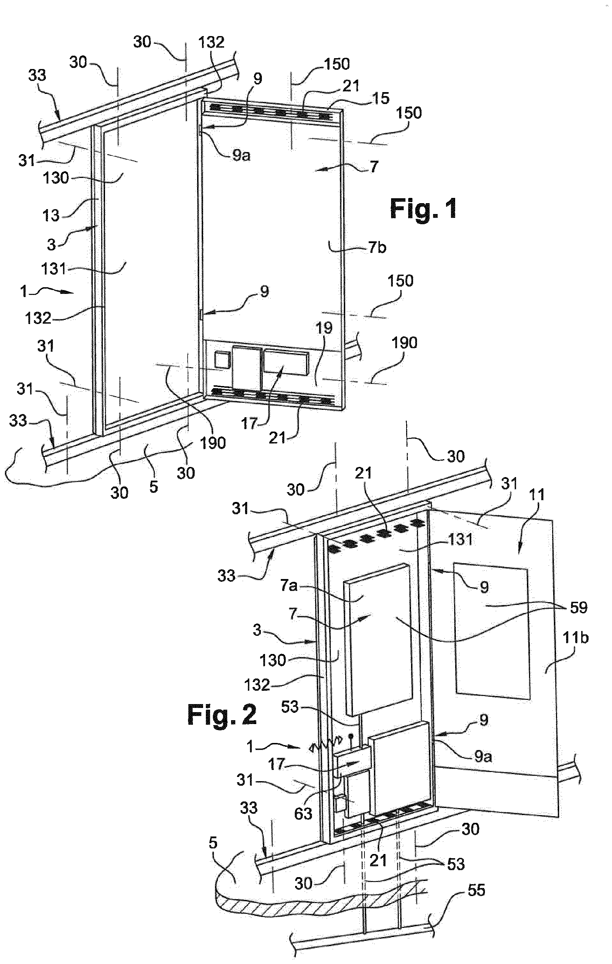

Figures 1-3, notamment, on voit une structure 1 d'affichage d'informations conforme à une solution ici proposée.

Elle comprend :
- une partie fixe 3 à fixer dressée sur ou contre un support, a priori un sol, 5,
- des moyens 30 de fixation de la partie fixe, et,
- au moins un écran 7 d'affichage d'informations lié à la partie fixe et s'étendant devant elle, ledit écran présentant une face avant 7a d'affichage visible.

Des moyens de mobilité 9 sont interposés entre la partie fixe et l'écran d'affichage 7, ou une façade 11, prévue à l'avant de l'écran d'affichage.

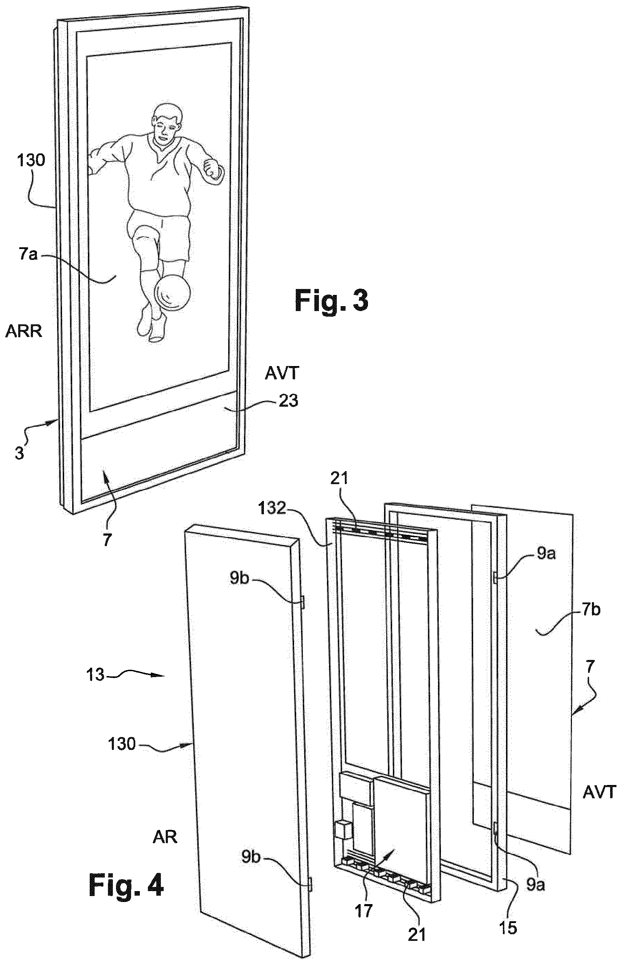

Ceci va permettre un mouvement de l'écran d'affichage 7 et/ou de la façade 11, par rapport à la partie fixe entre :
- une position fermée de l'écran d'affichage ou de la façade, devant ou contre ladite partie fixe 3, cette position fermée étant la position opérationnelle de fonctionnement où la face avant d'affichage est visible de devant la structure (côté AVT, comme figure 3),
- et une position ouverte de l'écran d'affichage ou de la façade autorisant un accès pour maintenance :
   * derrière la façade ou l'écran d'affichage,
   * ou à une face arrière, respectivement 11b, 7b de ladite façade ou dudit écran.

On a songé en particulier à une mobilité par rotation, comme illustré. Une mobilité relative, par translation d'avant en arrière et inversement, sur des rails télescopiques, perpendiculairement à l'écran est aussi possible, par exemple.

On doit comprendre par «partie fixe » qu'il s'agit d'une partie qui peut occuper une position fixe le long du quai, à la différence de l'écran d'affichage 7 et/ou de la façade 11 qui sont des sortes de portes ou de couvercles mobiles. A noter toutefois que tout ou partie de la «partie fixe » peut être elle-même mobile (par exemple vis-à-vis du bâti structurel fixe 33, par exemple via des charnières et un verrouillage débrayable (par exemple en prise sur le bâti structurel fixe 33 qui permettrait dans certaines circonstances d'ouvrir ensemble la partie fixe 3 et l'écran d'affichage 7 et/ou la façade 11.

Comme montré figures 1, 2, on conseille que la partie fixe 3 comprend :
- un bâti fixe 13 à fixer au support (ou à un bâti structurel intermédiaire de maintien), par exemple par certains au moins des moyens de fixation 30, et
- un bloc 130 plein ou essentiellement plein, fixé au bâti fixe par des seconds moyens de fixation 31 et fermant l'arrière (AR) de l'écran ou de la structure d'affichage, dans ladite position fermée (figure 3).

On voit aussi qu'il pourra paraître utile que le bloc plein et le bâti fixe comprennent respectivement un panneau plein ou essentiellement plein 131 et un cadre 132 qui l'entoure au moins en partie, les moyens de mobilité 9 étant de préférence interposés entre le cadre et l'écran d'affichage ou la façade.

Pour faciliter la fabrication, le montage et la maintenance, on recommande que soit par ailleurs prévue une structure périphérique mobile 15 à laquelle est fixée (par des moyens de fixation 150) l'écran d'affichage 7 et qui porte de préférence une partie 9a des moyens de mobilité (par exemple une branche mâle ou femelle de paumelles) ; cf. figures 1, 4.

La partie 9b complémentaire des moyens de mobilité sera fixée au bâti fixe 13, tel en particulier le cadre 132 (figure 2) ou le (un rebord intérieur du) bloc 130 (figure 4).

Comme illustré, on conseille que les moyens de mobilité 9, 9a, 9b comprennent des charnières disposées sur la hauteur, le long localement de la partie fixe et de l'un des côtés latéraux de la façade (figure 2) ou de ladite structure périphérique mobile 15 (figure 4).

Pour faire fonctionner l'écran d'affichage, telle une dalle LCD, la structure d'affichage 1 comprend des composants 17 électriques ou électroniques, tels ceux illustrés figure 4.

Pour un accès facilité et une compacité, on recommande que les composants électriques ou électroniques 17 soient, en partie au moins, avec l'écran d'affichage 7, liés avec ladite structure périphérique mobile 15, pour être mobile avec elle, comme montré figure 1 (fixations 150). Ces composants 17 pourront alors en particulier être, de façon intermédiaire, fixés à une plaque 19 montée derrière l'écran 7 et fixée elle-même à la structure périphérique 15 (fixations 190).

Dans ce cas, on conseille que des moyens de ventilation 21 soient montés avec la partie mobile : structure périphérique 15 et/ou cadre 132, et fixés au cadre.

En alternative, si seule la façade est mobile (figure 2), on recommande que :
- les composants 17 précités demeurent, en partie au moins, fixes, montés contre/avec la face avant du bloc 130,
- et qu'il en soit de même pour l'écran 7,
- et de préférence pour les moyens de ventilation 21.

Figure 2, on voit d'ailleurs que les composants 17 de fonctionnement de l'écran d'affichage 7 sont fixés à la partie fixe 3 et cet écran est à façade tactile. Devant lui il n'y a qu'une unique vitre de façade, 11, mobile par rapport à la partie fixe, de préférence sans autre vitre devant l'écran. L'ouverture de la vitre 11 donne accès aux composants et à la face avant de l'écran, comme montré figure 2.

Les moyens de ventilation 21 refroidissent les composants 17 et soufflent de l'air entre l'écran et la vitre de façade 11.

En tant que moyens de ventilation 21, on recommande deux lignes de ventilateurs, respectivement en haut et en bas de la structure d'affichage, pour ventiler l'écran et les composants situés entre eux, structure fermée, opérationnelle.

De façon générale, on recommande, pour une maintenance simple et la protection des écrans, que la structure 1 d'affichage d'informations comprenne une vitre avant 23 située devant l'écran d'affichage 7 ou la façade 11 et liée à l'un ou l'autre, la vitre avant étant montée mobile avec l'écran d'affichage ou la façade.

En toute hypothèse, on préfèrera qu'une seule vitre (transparente) protège l'écran, en façade, qu'il s'agisse de sa vitre (figures 1, 3), ou d'une vitre rapportée, mobile sans lui (figure 2). Et même de préférence, on pourra choisir que, tant devant chaque écran d'affichage qu'à l'écart de cet écran, le long de la barrière, cette dernière comprenne une seule vitre dans le sens de son épaisseur, comme sur les figures. Ceci facilitera la maintenance et peut par exemple éviter une ventilation entre les deux vitres, si deux telles vitres devaient exister devant un des écrans 7 (celle de l'écran + une des vitres 111 dressée devant).

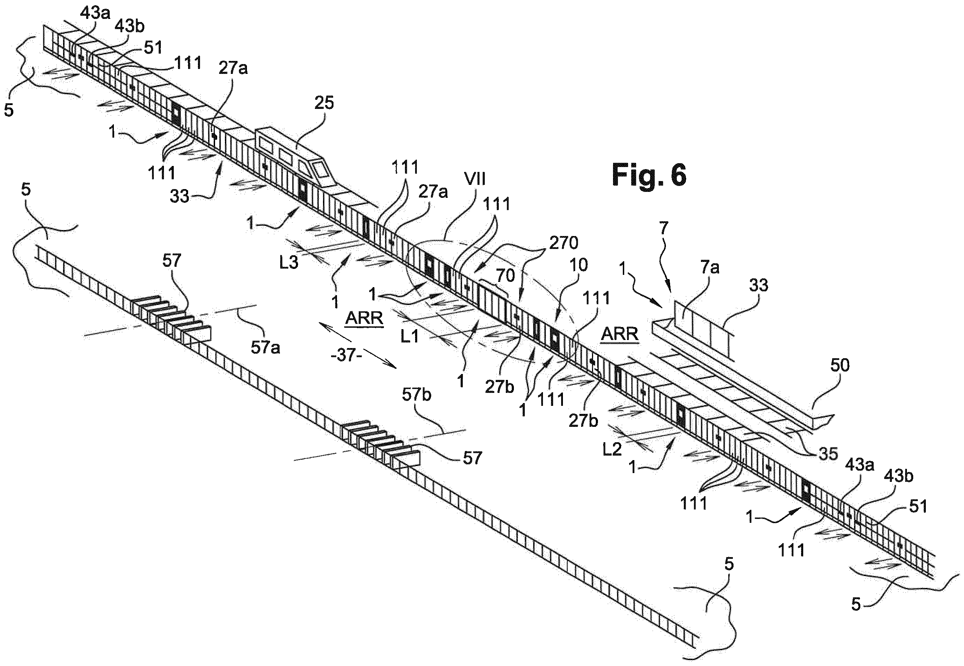

Figures 6 et suivantes, on voit une barrière allongée 10 équipée de plusieurs structures d'affichage d'informations 1, étant précisé que seule une partie de la barrière est parfois illustrée.

La barrière 10 est dressée sur le support 5 qui la reçoit, lequel est horizontal.

En pratique, il s'agira typiquement d'un quai de station où passe un véhicule de transport 25. On peut toutefois aussi imaginer une séparation entre zone publique et zone à accès réservé, par exemple dans un aéroport.

La barrière 10 s'élève entre un côté avant (AVT) accessible et un côté arrière (ARR) non accessible.

Elle comprend, sur sa longueur :
- au moins un vantail mobile de porte 27a (ou 27a, 27b), pour ouvrir et fermer un passage 29, à cet endroit, entre les côtés respectivement avant accessible et arrière non accessible,
- au moins un bloc fixe 31a (ou 31a, 31b) adjacent au vantail,
- les structures d'affichage d'informations 1 situées à l'écart du, ou de chaque vantail et dont la face avant d'affichage est de préférence visible sur le côté avant accessible,
- un bâti structurel (fixe) 33 auquel appartient le, ou chaque, bloc fixe 3 et qui peut être fixé à chaque partie fixe par les moyens 30 de fixation de la partie fixe,
- et des moyens 31 de fixation du bâti structurel, ces moyens 31 étant fixés dans le support 5.

Les structures d'affichage d'informations 1 sont situées à l'écart du, ou de chaque vantail 27a, 27b. Leur face avant d'affichage est visible sur le côté avant accessible AVT.

En variante, on pourrait prévoir que la face avant d'affichage soit visible sur le côté arrière inaccessible ARR (côté voies 35 figure 6), mais de l'autre côté des ces voies (quai 50 figure 6). Ainsi, depuis l'autre quai 50, les informations sur l'écran seraient visibles, côté quai 5, à travers le vitres transparentes 111 montées (a priori fixement) sur le bâti structurel fixe 33 entre les zones de la barrière pourvues des structures d'affichage 1.

Le (ou chaque) vantail mobile de porte 27a (ou 27a, 27b) est relié mécaniquement au bloc fixe 31a (ou 31a, 31b), parallèlement auquel et donc le long duquel il coulisse, suivant la direction de coulissement 37.

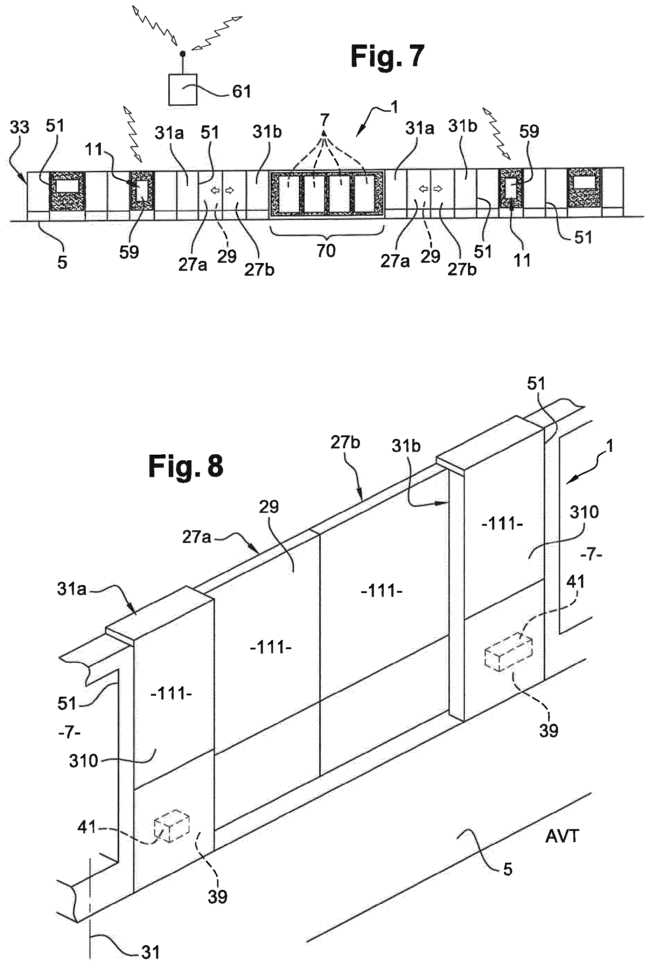

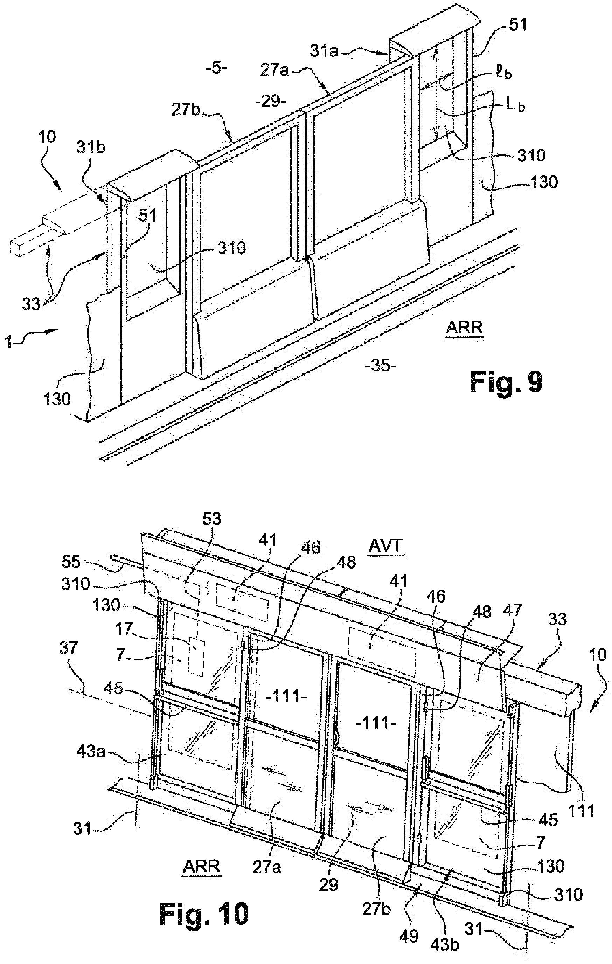

Dans le cas d'un bloc fixe dit fonctionnel, celui-ci, ou l'un au moins des deux 31a, 31b, renfermera un espace 39 où est disposé l'un au moins des composants 41 parmi : un moteur de motorisation du (des) vantail(aux) mobile de porte, un dispositif d'entraînement du (des) vantail(aux) interposé fonctionnellement entre le moteur et le vantail, un dispositif de verrouillage ou de déverrouillage du vantail (des vantaux) en position ouverte ou fermée et une butée de fin course de coulissement du vantail mobile de porte. Cette situation est celle de l'exemple des figures 8 et 9 où l'on voit respectivement le côté AVT (côté quai, ou accessible) et le côté ARR (côté voie 35, ou inaccessible).

En alternative, on prévoit que le (ou chaque) vantail mobile de porte 27a (ou 27a, 27b), prévu donc pour un accès ou une sortie normal par le passage 29, soit bordé latéralement par une ou deux portes de sécurité 43a, 43b s'étendant le long de la barrière, parallèlement à elle, comme schématisé figure 10.

Chaque porte latérale de sécurité est équipée d'un système de sécurité connu, à barre anti-panique 45 qu'il suffit de pousser pour que la porte s'ouvre (ici en pivotant), vers le côté accessible, depuis le côté inaccessible (ARR).

La ou chaque porte de sécurité est montée mobile sur un encadrement fixe 46, par exemple par des charnières 48 ayant un axe vertical commun ; figure 10.

En outre, une ou chaque porte de sécurité 43a et/ou 43b est équipée d'une structure 1 d'affichage d'informations, ou du moins d'un écran 7 dont la face visible 7a est tournée vers l'avant AVT (le quai). Côté ARR, on voit figure 10 le bloc 130 plein ou essentiellement plein, fixé au bâti fixe.

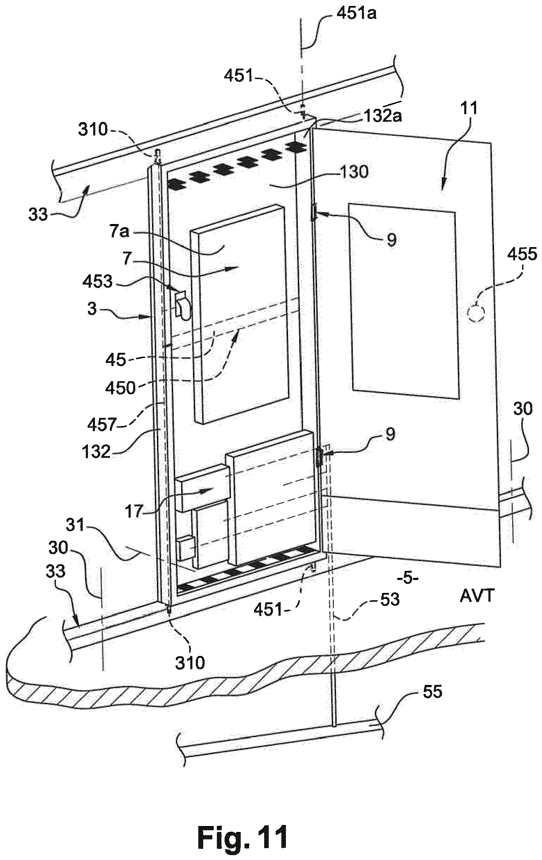

Figure 11, on retrouve nombre d'éléments de la figure 2, bien qu'il s'agisse d'une solution où la partie fixe 3 demeure fixe tant que l'on n'a pas ouvert les moyens 310 de fixation libérable établis entre le bâti structurel 33 et cette partie fixe 3 qui deviendra alors une porte, puisqu'elle est liée au bâti structurel par des moyens 451 de pivotement, suivant un axe vertical 451a.

De préférence, ces moyens 451 de pivotement, et l'axe 451a sont situés sur un bord latéral vertical du cadre 132, a priori du côté où pivote (selon un axe parallèle) la façade 11, si elle est prévue. Des moyens de verrouillage 453 sont prévus sur la partie fixe 3 pour verrouiller et déverrouiller sélectivement les moyens de fixation libérable. Un verrou ou une serrure avec leur tringlerie conviendront. Si la façade 11 est prévue, des moyens 455 de verrouillage libérable distincts de ceux 453 (et par exemple verrouillable sur le cadre 132, mais pas sur le bâti 33) permettront d'avoir accès au panneau 7/7a sans accès possible à l'autre côté (arrière), sauf ouverture spécifiques des moyens 453.

En rapprochant les figures 10 et 11, on comprendra que chaque porte 43a, 43b pourra correspondre à la solution de la figure 11 : La partie fixe 3 (occasionnellement porte) sera alors pourvue du système de sécurité 450 à barre anti-panique 45 (côté inaccessible, par exemple à l'arrière du bloc 130 fixé au cadre 132). Ce système à barre anti-panique sera lié fonctionnellement aux moyens 310 de fixation libérable (lesquels seront favorablement de type verrou magnétique), de sorte que cette « porte occasionnelle de sécurité » 3 (ou 43a, 43b figure 10) puisse s'ouvrir même en position verrouillée des moyens de verrouillage 453, sous une poussée exercée sur la barre anti-panique 45. La poussée sur la barre 45 provoquera l'actionnement de la tringlerie 457 (ou d'un relais), sans que le verrouillage des moyens 453 l'interdise, libérant ainsi les moyens 310 de fixation. La porte occasionnelle 3 s'ouvrira alors, en l'espèce exclusivement vers l'avant (côté quai ou AVT), les moyens 451 de pivotement étant disposés en conséquence.

Figure 11, on voit aussi que, favorablement (pour permettre le pivotement de la partie 3), on fera passer les câbles 53 d'alimentation électriques dans le montant 132a vertical correspondant du cadre pour alimenter les composants 17. Les moyens 30 fixent le bâti structurel 33 au support (tel le sol) 5, à l'écart de la partie fixe 3.

Sur un autre aspect, on voit figure 10 (et comme sur les figures 8, 9) que les vantaux mobiles de porte 27a, 27b sont vitrés (vitre transparente 111), comme pourrait l'être le panneau latéralement adjacent à la (chaque) porte de sécurité 43a et/ou 43b (ce peut être le bloc 130 de la figure 11).

Dans ce cas, les composants 41 de fonctionnement du(des) vantaux 27a, 27b (pour les ouvrir, les fermer, les verrouiller et les déverrouiller) seront logés, au moins essentiellement, dans un caisson supérieur 47 qui surmonte le module-porte 49, ce module comprenant les vantaux mobiles et porte latérale de sécurité. Le caisson s'étend longitudinalement, suivant la direction 37, y compris donc au-dessus des vantaux, tant en position ouverte que fermée de ceux-ci.

Comme montré figures 7-9 (où la structure 1 est juste symbolisée), on prévoit par ailleurs que, sur la longueur de la barrière 10, le bâti structurel 33 comprenne des montants latéraux 51 dressés, entre deux desquels est interposée au moins une structure d'affichage 1, un écran d'affichage 7 (solution de la figure 1, par exemple), ou cet écran d'affichage et la façade 11 (solution de la figure 2). Les montants 51 seront de préférence des poutres ou poteaux creux(ses) à section fermée (rectangulaire)ou en U.

Il est clair que de tels montants latéraux 51 peuvent être prévus dans le cas d'une barrière à porte(s) de sécurité 43a, 43b, d'autant que la figure 6 envisage cela.

Comme déjà mentionné, on recommande encore que, pour la maintenance et la sécurité, les façades d'affichage d'informations le long de la barrière comprennent, devant chaque écran d'affichage 7, au moins un panneau vitré à travers lequel on voit les informations.

Et pour l'alimentation électrique des écrans 7 et/ou de certains au moins des composants électriques ou électroniques 17, il est prévu, au moins dans le cas d'une barrière 1 sans caisson supérieur 47, que cette barrière comprenne, sur sa longueur, des câbles d'alimentation électrique 53 connectés auxdits écrans d'affichage et/ou à l'un au moins desdits composants. Les câbles 53 passent dans le support 5, à l'écart de chaque vantail 27a, 27b, et bloc fixe s'il existe (cf. figures 8, 9).

Comme montré figure 2, les câbles d'alimentation électrique 53 sont raccordés à une alimentation électrique (câble) principal(e) 55 qui, en particulier si la barrière est dépourvue de caisson longitudinal supérieur 47, passera sous le support 5, ici un quai sous lequel est réservé un volume de passage en particulier pour le câblage électrique.

Ainsi, on évite d'encombrer la zone des passages 29.

Les barrières dépourvues de caisson longitudinal supérieur 47 seront typiquement des barrières dites « mi-hauteur », où, vantail(aux) ouvert(s), l'espace au-dessus de ceux-ci est libre (cas des figures 8, 9).

Si la barrière est pourvue d'un caisson longitudinal supérieur 47 (en un ou plusieurs tronçons alignés) -cas des barrières dites « pleine-hauteur »-, alors le câble d'alimentation électrique principale 55 passera dans le caisson 47 où se raccorderont les câbles électriques 53 d'alimentation des composants électriques ou électroniques 17 (voire des composants 41 de fonctionnement des vantaux), comme schématisé figure 10.

Pour favoriser notamment la circulation des personnes en particulier dans la zone accessible 5, voire entre les deux zones accessible/inaccessible, et si, comme schématisé figure 6, la barrière 10 occupe toute la longueur d'un quai 5 de station où passe un véhicule de transport 25, on recommande par ailleurs que cette barrière comprenne :
- deux premiers ensembles de premiers et seconds blocs fixes 31a, 31b s'étendant le long de la barrière, et
- deux seconds ensembles de premiers et seconds vantaux mobiles de porte 27a, 27b,
- avec les écrans d'affichage 7 répartis :
   * pour certains, en groupe d'écrans 70 (figure 6) disposés côte à côte, vers la partie centrale de la longueur du quai, entre les deux seconds ensembles de premiers et seconds vantaux mobiles de portes (repérés 270 figure 6),
   * pour d'autres, disposés individuellement, plus latéralement le long du quai ; voir aussi figure 6.

Dans le même but, on conseille que le groupe d'écrans disposés côte à côte vers la partie centrale de la longueur du quai présente, suivant la longueur de la barrière, une longueur L1 supérieure à la longueur L2 ou L3 de chaque second ensemble ; cf. figure 6 où L2 et L3 figurent plutôt une dimension en largeur, mais ceci ne change rien aux proportions ci-avant indiquées.

Un autre point traité concerne encore la disposition privilégiée des zones d'affichages d'informations sur écran. Dans ce cadre, on recommande que le ou chaque bloc fixe 31a (ou 31a, 31b) présente, le long de la barrière, une surface libre 310 adjacente audit espace 39 prévu pour loger les composants 41, et qui pourrait être vitrée et transparente (comme figure 8, 9 : vitres 111), les écrans d'affichage 7 étant alors implantés à l'écart du ou des blocs fixes, avec alors, pour certains au moins, une face avant d'affichage plus importante que celle de ladite surface libre.

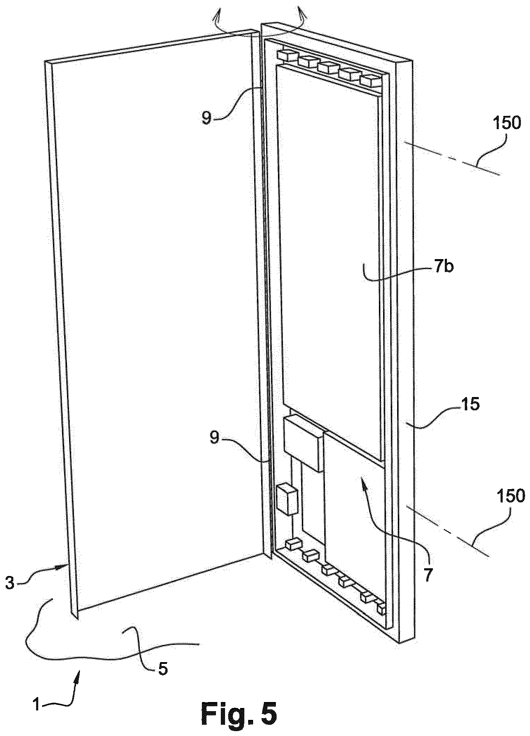

Dans une réalisation comme figures 8,9, on peut toutefois prévoir qu'une structure 1 avec un écran 7, comme selon l'une des solutions des figures 1-5, soit fixé à côté du bloc fixe 31a, 31b, de façon donc adjacente à lui, l'alimentation des composants électriques ou électroniques 17 pouvant s'opérer via l'espace 39.

Une telle implantation des structures à écran 7, tous au moins potentiellement de taille supérieure à Lb X lb, améliorera la visibilité sur les écrans, éloignera les personnes situées devant les écrans à l'écart des vantaux et de leur proximité immédiate, limitera le poids des vantaux et évitera de compliquer leur sécurité opérationnelle.

Concernant maintenant une station en elle-même, telle celle de la figure 6, on pourra typiquement la définir comme une zone :
- où passe un véhicule de transport (25),
- ayant un quai 5, et
- présentant des accès 57 au quai pour des passagers souhaitant accéder au véhicule, en station, chaque accès s'étendant (ou débouchant sur le quai 5) suivant un axe (tels 57a et 57b pour les deux accès schématisés), la station comprenant, le long du quai, plusieurs structures d'affichage d'informations 1.

Les écrans d'affichage sont répartis comme ci-dessus, à savoir :
- pour certains, en groupe d'écrans disposés côte à côte, vers la partie centrale de la longueur du quai, entre deux groupes de vantaux mobiles et blocs fixes,
- pour d'autres, disposés individuellement, plus latéralement le long du quai.

Un point important est que le(s) groupe(s) d'écrans 70 disposés côte à côte sont décalés latéralement par rapport à l'axe de chaque accès 57.

Ceci éloignera les personnes situées devant les écrans à l'écart de l'axe de chaque accès, ce qui est favorable à la sécurité et à l'accès pour la maintenance.

Un autre aspect de la station concerne le fait que les écrans d'affichage seront de préférence répartis :
- pour des premiers, en groupe d'écrans 70 disposés côte à côte, vers la partie centrale de la longueur du quai, entre deux groupes de vantaux mobiles et blocs fixes ou portes de sécurité (43a, 43b),
- pour des seconds, disposés individuellement, plus latéralement le long du quai que les premiers (tels ceux de largeur L2 ou L3).

Comme on peut le comprendre avec les figures 2, 6, 7, certaines au moins des structures d'affichage de ces seconds écrans d'affichage seront de préférence pourvues de moyens de fonctionnement interactifs 59 connectés à des moyens de traitement 61 situés à distance, pour autoriser une interactivité homme-machine permettant à un utilisateur situé devant l'un de ces seconds écrans, tels ceux sous les lignes brisées figure 7)de transmettre (via des moyens d'émission/réception) une demande vers les moyens de traitement, via les moyens de fonctionnement interactifs 59, 63, et obtenir un retour d'informations sur ces seconds écrans d'affichage.

De préférence, les moyens de traitement 61 et les moyens locaux de fonctionnement interactifs 59, 63 (situés sur le quai) échangeront via des moyens d'émission/réception et/ou de traitement locaux des informations permettant une communication sans fil.

On notera encore que d'autres aspects inventifs sont considérés comme susceptibles de répondre comme une invention à des problèmes techniques identifiés.

Il s'agit de ce qui suit :
- une barrière allongée, dressée sur un support, lequel est horizontal, tel un quai de station où passe un véhicule de transport, la barrière s'élevant entre un côté avant accessible et un côté arrière non accessible et comprenant, sur sa longueur :
- au moins un vantail mobile de porte, pour ouvrir et fermer un passage, à cet endroit, entre les côtés avant accessible et arrière non accessible,
- au moins un bloc fixe auquel le vantail mobile de porte est relié mécaniquement et parallèlement auquel ledit vantail coulisse, le bloc fixe, qui est adjacent au vantail, renfermant un espace où est disposé l'un au moins des composants parmi : un moteur de motorisation du vantail mobile de porte, un dispositif d'entraînement du vantail interposé fonctionnellement entre le moteur et le vantail, un dispositif de verrouillage ou de déverrouillage du vantail en position ouverte ou fermée et une butée de fin course de coulissement du vantail mobile de porte,
- plusieurs structures d'affichage d'informations situées à l'écart du, ou de chaque, vantail et comprenant chacune au moins un écran d'affichage d'informations présentant une face avant d'affichage de préférence visible sur le côté avant accessible,
- un bâti structurel fixe auquel sont fixés, directement ou non, les écrans d'affichage, et,
- de préférence des moyens de fixation du bâti structurel, fixés dans le support.

Avec une telle barrière multimédia, on pourra améliorer l'information des usagers, sans imposer qu'ils s'écartent de la bordure du quai (là où sont normalement disposées les barrières de type « porte-palière », comme ici), et sans risquer d'accumulation de spectateurs des écrans face aux vantaux.

On recommande que, comme déjà évoqué, des câbles d'alimentation électrique soient, le long de la barrière dressée sur le support, connectés auxdits écrans d'affichage et/ou à l'un au moins desdits composants de fonctionnement de ces écrans, les câbles passant dans le support, à l'écart de chaque vantail et bloc fixe.

Ainsi, on facilitera les raccordements électriques, en rendant aisées les implantations, sans nécessité d'un raccordement centralisé sur la barrière.

On recommandera par ailleurs que, également comme déjà évoqué,
- le ou chaque bloc fixe présente, le long de la barrière, une surface libre adjacente audit espace pour loger les de fonctionnement des écrans, et qui pourrait être vitrée et transparente, et
- la face avant d'affichage de certains au moins des écrans d'affichage d'informations soit plus importante que ladite surface libre, de sorte que les écrans d'affichage soient implantés à l'écart du ou des blocs fixes.

Ainsi, et comme déjà mentionné :
- les zones d'affichage sur écrans n'interféreront pas avec les zones de transit des personnes passant par les vantaux de porte,
- et, sur le quai ou par exemple le hall où se dressera la barrière, les personnes présentes pourront avoir aisément et en sécurité accès auxdites informations affichées, sans perdre de vue leur environnement : arrivée d'un train en station ou d'une personne dans le hall d'arrivée de l'aéroport....

Des stations élaborées comme ci-avant mentionné, mais avec ce type de barrière, conviendraient et sont ici considérées comme notamment répondant aux mêmes problèmes, ou apportant les mêmes avantages, que ceux-ci-dessus mentionnés.

## Revendications

1. Barrière allongée (10), dressée sur un support de quai horizontal où passe un véhicule de transport (25), la barrière (10) s'élevant entre un côté avant accessible et un côté arrière non accessible et comprenant sur sa longueur:
- au moins un vantail mobile de porte (27a, 27b) pour ouvrir et fermer un passage (29) entre les côtés avant accessible et arrière non accessible,
- au moins une porte de sécurité (43a, 43b) équipée d'un système à barre anti-panique (45), et montée mobile sur un encadrement fixe (46), la porte de sécurité bordant latéralement le vantail mobile de porte (27a, 27b) qui coulisse parallèlement à elle,
- plusieurs structures électroniques d'affichage d'informations (1), comprenant :
- une partie fixe (3) à fixer dressée sur ou contre un support (5),
- des moyens (30, 31 ,310) de fixation de la partie fixe, et,
- au moins un écran (7) d'affichage d'informations lié à la partie fixe (3) et s'étendant devant elle, ledit écran présentant une face avant (7a) d'affichage visible, **caractérisée en ce que** des moyens de mobilité (9, 9a, 9b) sont interposés entre la partie fixe et l'écran d'affichage (7), pour permettre un mouvement de l'écran d'affichage, par rapport à la partie fixe (3) entre :
- une position fermée de l'écran d'affichage (7), devant ou contre ladite partie fixe, cette position fermée étant la position opérationnelle de fonctionnement où ledit écran de la face avant (7a) d'affichage est visible de devant la structure,
- et une position ouverte de l'écran d'affichage (7) autorisant un accès (57) pour maintenance :
* derrière l'écran d'affichage (7),
* ou à une face arrière (7b) dudit écran lesdites structures électroniques (1) d'affichage étant situées à l'écart du, ou de chaque vantail (27a, 27b) et dont la face avant (7a) d'affichage est de préférence visible sur le côté avant accessible,
- un bâti structurel fixe (33) auquel appartient le, ou chaque, encadrement fixe (46) et qui est fixé à chaque partie fixe (3) par les moyens de fixation (30, 31) de la partie fixe, et,
- des moyens (30,31) de fixation du bâti structurel (33), fixés dans le support (5).

2. Barrière selon la revendication 1, où la partie fixe (3) comprend :
- un bâti fixe (13), à fixer au support (5) par certains au moins des moyens (30,31) de fixation, et
- un bloc plein ou essentiellement plein (130), fixé au bâti fixe (13) par des seconds moyens (31) de fixation et fermant l'arrière de l'écran (7) ou de la structure d'affichage (1), dans ladite position fermée.

3. Barrière selon la revendication 2, où le bloc plein (130) et le bâti fixe (13) comprennent, ensemble, un panneau plein ou essentiellement plein (131) et un cadre (132) qui l'entoure au moins en partie, les moyens de mobilité (9, 9a, 9b) étant interposés entre le cadre et l'écran d'affichage (7).

4. Barrière selon l'une des revendications 1 à 3, qui comprend une structure périphérique mobile (15) à laquelle est fixé l'écran d'affichage (7) et qui de préférence porte une partie des moyens de mobilité (9, 9a, 9b) .

5. Barrière selon l'une des revendications 1 à 4, où les moyens de mobilité (9, 9a, 9b) comprennent des charnières (48) disposées sur la hauteur, le long localement de la partie fixe (3) et de l'un des côtés latéraux de ladite structure périphérique mobile (15).

6. Barrière selon la revendication 4 ou 5, qui comprend des composants (17) électriques ou électroniques de fonctionnement de l'écran d'affichage (7), lesquels sont, en partie au moins, avec l'écran d'affichage, liés avec ladite structure périphérique mobile (15), pour être mobile avec elle.

7. Barrière selon l'une des revendications 1 à 5 :
- qui comprend des composants (17) électriques ou électroniques de fonctionnement de l'écran d'affichage (7), lesquels sont fixés à la partie fixe (3),
- et où l'écran d'affichage (7) est un écran tactile devant lequel une vitre (111) de façade (11) est mobile par rapport à la partie fixe (3), de préférence sans autre vitre devant l'écran (7), l'ouverture de la vitre donnant accès aux composants (17).

8. Barrière selon l'une des revendications 1 à 6, qui comprend une vitre avant (23) située devant l'écran d'affichage (7) et liée à l'un ou l'autre, la vitre avant (23) étant montée mobile avec l'écran d'affichage.

9. Barrière allongée (10), dressée sur un support (5), lequel est horizontal, tel un quai (5) de station où passe un véhicule de transport (25), la barrière (10) s'élevant entre un côté avant accessible et un côté arrière non accessible et comprenant, sur sa longueur :
- au moins un vantail mobile de porte (27a, 27b), pour ouvrir et fermer un passage (29), à cet endroit, entre les côtés avant accessible et arrière non accessible,
- au moins un bloc fixe (31a, 31b) auquel le vantail mobile de porte (27a, 27b) est relié mécaniquement et parallèlement auquel ledit vantail coulisse, le bloc fixe, qui est adjacent au vantail, renfermant un espace (39) où est disposé l'un au moins des composants (41) parmi : un moteur de motorisation du vantail mobile de porte (27a, 27b), un dispositif d'entraînement du vantail interposé fonctionnellement entre le moteur et le vantail, un dispositif de verrouillage ou de déverrouillage du vantail en position ouverte ou fermée et une butée de fin course de coulissement du vantail mobile de porte (27a, 27b),
- plusieurs structures électroniques d'affichage d'informations (1) comprenant :
- une partie fixe (3) à fixer dressée sur ou contre un support (5),
- des moyens (30, 31 ,310) de fixation de la partie fixe, et,
- au moins un écran (7) d'affichage d'informations lié à la partie fixe (3) et s'étendant devant elle, ledit écran présentant une face avant (7a) d'affichage visible, **caractérisée en ce que** des moyens de mobilité (9, 9a, 9b) sont interposés entre la partie fixe et l'écran d'affichage (7), pour permettre un mouvement de l'écran d'affichage, par rapport à la partie fixe (3) entre :
- une position fermée de l'écran d'affichage (7) devant ou contre ladite partie fixe, cette position fermée étant la position opérationnelle de fonctionnement où ledit écran de la face avant (7a) d'affichage est visible de devant la structure,
- et une position ouverte de l'écran d'affichage (7) autorisant un accès (57) pour maintenance :
* derrière l'écran d'affichage (7),
* ou à une face arrière (7b) dudit écran,
lesdites structures électroniques (1) d'affichage étant situées à l'écart du, ou de chaque, vantail et dont la face avant (7a) d'affichage est de préférence visible sur le côté avant accessible,
- un bâti structurel fixe (33) auquel appartient le, ou chaque, bloc fixe (31a, 31b) et qui est fixé à chaque partie fixe par les moyens (31,310) de fixation de la partie fixe (3), et,
- des moyens (30,31) de fixation du bâti structurel (33) fixés dans le support (5).

10. Barrière selon une des revendications 1 à 9, où, sur la longueur, le bâti structurel (33) comprend des montants latéraux (51) dressés, entre deux desquels est interposée au moins une dite structure d'affichage (1), un dit écran d'affichage (7).

11. Barrière selon l'une des revendications 1 à 10, où au moins une dite structure d'affichage d'informations (1) comprend, devant l'écran d'affichage (7), au moins un panneau vitré à travers lequel on voit les informations.

12. Barrière selon l'une des revendications 1 à 11, qui comprend, le long de la barrière dressée (10) sur le support (5), des câbles d'alimentation électrique (53) connectés auxdits écrans d'affichage (7) et/ou à l'un au moins desdits composants (17), les câbles passant dans le support (5), à l'écart de chaque vantail (27a, 27b) et bloc fixe (31a, 31b) ou porte de sécurité (43a, 43b), ou dans le montant creux (132a) du cadre où passe un axe (451) de pivotement d'une telle porte.

13. Barrière selon l'une des revendications 1 à 12 qui occupe toute la longueur d'un quai de station (5) où passe un véhicule de transport (25) et qui comprend:
- deux premiers ensembles de premiers et seconds blocs fixes (31a, 31b) (ou portes de sécurité (43a, 43b) s'étendant le long de la barrière (10), et
- deux seconds ensembles de premiers et seconds vantaux mobiles de porte (27a, 27b),
- avec les écrans d'affichage (7) répartis :
* pour certains, en groupe d'écrans (70) disposés côte à côte, vers la partie centrale de la longueur du quai (5), entre les deux seconds ensembles de premiers et seconds vantaux mobiles de portes,
* pour d'autres, disposés individuellement, plus latéralement le long du quai (5).

14. Barrière selon la revendication 13, où le groupe d'écrans (70) disposés côte à côte vers la partie centrale de la longueur du quai (5) présente, suivant la longueur de la barrière (10), une longueur supérieure à la longueur de chaque second ensemble.

15. Barrière selon l'une des revendications 1 à 14, où, devant et l'écart de chaque écran d'affichage (7), la structure d'affichage (15) comprend, le long de la barrière (10), une seule vitre (111) dans le sens de son épaisseur.

16. Barrière selon l'une des revendications 9 à 12 ou 15, où :
- le ou chaque bloc fixe (31a, 31b) présente, le long de la barrière (10), une surface libre (310) adjacente audit espace (39) pour loger les composants (17), et qui pourrait être vitrée et transparente, et
- la face avant (7a) d'affichage de certains au moins des écrans d'affichage d'informations (7) est plus importante que ladite surface libre, de sorte que les écrans d'affichage sont implantés à l'écart du ou des blocs fixes (31a, 31b).

17. Barrière selon la revendication 1 ou 10, 11, où au moins une des portes de sécurité (43a, 43b) est équipée d'une structure électronique d'affichage d'informations (1) selon l'une des revendications 1 à 8 pourvue d'un dit écran (7) d'affichage d'informations.

18. Barrière selon l'une des revendications 1 à 17 comprenant :
- des moyens (310,451) de fixation entre le bâti structurel (33) et la partie fixe (3), comprenant :
-- des moyens (310) de fixation libérable entre le bâti structurel (33) et la partie fixe (3),
-- des moyens (451) de pivotement de la partie fixe (3) sur le bâti structurel (33), et,
- des moyens de verrouillage (453) pour verrouiller et déverrouiller sélectivement les (310) moyens de fixation libérable.

19. Barrière selon les revendications 1 et 18, où le système à barre anti-panique (45) est lié fonctionnellement aux moyens (310) de fixation libérable entre le bâti structurel (33) et ladite partie fixe (3), laquelle est définie par la porte de sécurité (43a,43b), de sorte que ladite porte de sécurité puisse s'ouvrir même en position verrouillée des moyens de verrouillage 453) sous une poussée exercée sur la barre anti-panique (45), l'une au moins des structures d'affichage d'informations étant fixée à l'une au moins des portes de sécurité (43a,43b).

20. Station où passe un véhicule de transport (25), la station ayant un quai (5) et présentant des accès (57) au quai (5) pour des passagers souhaitant accéder au véhicule, en station, chaque accès s'étendant suivant un axe (57a, 57b), la station comprenant, le long du quai, une barrière (10) selon l'une des revendications 1 à 17, les écrans d'affichage (7) étant répartis :
- pour certains, en groupe d'écrans (70) disposés côte à côte, vers la partie centrale de la longueur du quai (5), entre deux groupes de vantaux mobiles (127a, 27b) et blocs fixes (31a, 31b),
- pour d'autres, disposés individuellement, plus latéralement le long du quai (5), le(s) groupe(s) d'écrans (70) disposés côte à côte étant décalés latéralement par rapport à l'axe (57a, 57b) de chaque accès (57).

21. Station où passe un véhicule de transport (25), la station ayant un quai (5) et présentant des accès (57) au quai pour des passagers souhaitant accéder au véhicule, en station, chaque accès s'étendant suivant un axe (57a, 57b), la station comprenant, le long du quai, une barrière (10) selon l'une des revendications 1 à 17, les écrans d'affichage (7) étant de préférence répartis :
- pour des premiers, en groupe d'écrans (70) disposés côte à côte, vers la partie centrale de la longueur du quai (5), entre deux groupes de vantaux mobiles (27a, 27b),
- pour des seconds, disposés individuellement, plus latéralement le long du quai (5) que les premiers, certaines au moins des structures d'affichage de ces seconds écrans d'affichage (7) étant en outre pourvues de moyens de fonctionnement interactifs (59, 63) connectés à des moyens de traitement (61) situés à distance, pour autoriser une interactivité homme-machine permettant à un utilisateur situé devant l'un de ces seconds écrans à transmettre une demande vers les moyens de traitement (61), via les moyens de fonctionnement interactifs, et obtenir un retour d'informations sur lesdits seconds écrans d'affichage (7).

## Patentansprüche

1. Langgestreckte Barriere (10), die auf einem horizontalen Plattformträger errichtet ist, wo ein Transportfahrzeug (25) vorbeifährt, wobei sich die Barriere (10) zwischen einer zugänglichen Vorderseite und einer unzugänglichen Hinterseite erhebt und auf ihrer Länge Folgendes umfasst:
- mindestens einen beweglichen Türflügel (27a, 27b) zum Öffnen und Schließen eines Durchgangs (29) zwischen der zugänglichen Vorder- und der unzugänglichen Hinterseite,
- mindestens eine Sicherheitstür (43a, 43b), die mit einem Antipanikstangensystem (45) ausgerüstet und beweglich auf einer festen Rahmung (46) angebracht ist, wobei die Sicherheitstür seitlich an den beweglichen Türflügel (27a, 27b) angrenzt, der parallel zu ihr gleitet,
- mehrere elektronische Informationsanzeigestrukturen (1) umfassend:
- einen festen Abschnitt (3), der auf oder gegen einen Träger (5) errichtet zu befestigen ist,
- Befestigungsmittel (30, 31, 310) des festen Abschnitts, und
- mindestens einen Informationsanzeigebildschirm (7), der mit dem festen Abschnitt (3) verbunden ist und sich vor ihm erstreckt, wobei der Bildschirm eine sichtbare Anzeigevorderseite (7a) aufweist, **dadurch gekennzeichnet, dass** Beweglichkeitsmittel (9, 9a, 9b) zwischen dem festen Abschnitt und dem Anzeigebildschirm (7) eingefügt sind, um eine Bewegung des Anzeigebildschirms bezogen auf den festen Abschnitt (3) zwischen:
- einer geschlossenen Position des Anzeigebildschirms (7), vor oder gegen den festen Abschnitt, wobei diese geschlossene Position die operative Betriebsposition ist, in welcher der Bildschirm der Anzeigevorderseite (7a) von vor der Struktur sichtbar ist,
- und einer offenen Position des Anzeigebildschirms (7) zu erlauben, die einen Wartungszugang (57):
* hinter den Anzeigebildschirm (7),
* oder zu einer Hinterseite (7b) des Bildschirms erlaubt,
wobei sich die elektronischen Anzeigestrukturen (1) abseits von dem oder jedem Flügel (27a, 27b) befinden, und dessen Anzeigevorderseite (7a) vorzugsweise auf der zugänglichen Vorderseite sichtbar ist,
- ein festes Strukturgestell (33), zu dem die oder jede feste Rahmung (46) gehört und das an jedem festen Abschnitt (3) durch Befestigungsmittel (30, 31) des festen Abschnitts befestigt ist, und
- Befestigungsmittel (30, 31) des Strukturgestells (33), die in dem Träger (5) befestigt sind.

2. Barriere nach Anspruch 1, wobei der feste Abschnitt (3) Folgendes umfasst:
- ein festes Gestell (13), das zumindest durch bestimmte der Befestigungsmittel (30, 31) am Träger (5) zu befestigen ist, und
- ein voller oder im Wesentlichen voller Block (130), der durch zweite Befestigungsmittel (31) am festen Gestell (13) befestigt ist und die Hinterseite des Bildschirms (7) oder der Anzeigestruktur (1) in der geschlossenen Position schließt.

3. Barriere nach Anspruch 2, wobei der volle Block (130) und das feste Gestell (13) zusammen eine volle oder im Wesentlichen volle Platte (131) und einen Rahmen (132), der sie zumindest teilweise umgibt, umfassen, wobei die Beweglichkeitsmittel (9, 9a, 9b) zwischen dem Rahmen und dem Anzeigebildschirm (7) eingefügt sind.

4. Barriere nach einem der Ansprüche 1 bis 3, die eine bewegliche Peripheriestruktur (15) umfasst, an der der Anzeigebildschirm (7) befestigt ist und die vorzugsweise einen Teil der Beweglichkeitsmittel (9, 9a, 9b) trägt.

5. Barriere nach einem der Ansprüche 1 bis 4, wobei die Beweglichkeitsmittel (9, 9a, 9b) Scharniere (48) umfassen, die auf der Höhe lokal entlang dem festen Abschnitt (3) und einer der Seitenflächen der beweglichen Peripheriestruktur (15) angeordnet sind.

6. Barriere nach Anspruch 4 oder 5, die elektrische oder elektronische Komponenten (17) zum Betrieb des Anzeigebildschirms (7) umfasst, die zumindest teilweise mit dem Anzeigebildschirm mit der beweglichen Peripheriestruktur (15) verbunden sind, um mit ihr beweglich zu sein.

7. Barriere nach einem der Ansprüche 1 bis 5:
- die elektrische oder elektronische Bestandteile (17) zum Betrieb des Anzeigebildschirms (7) umfasst, die an dem festen Abschnitt (3) befestigt sind,
- und wobei der Anzeigebildschirm (7) ein Berührungsbildschirm ist, vor welchem eine Scheibe (111) einer Fassade (11) bezogen auf den festen Abschnitt (3) beweglich ist, vorzugsweise ohne andere Scheibe vor dem Bildschirm (7), wobei die Öffnung der Scheibe Zugang zu den Komponenten (17) gewährt.

8. Barriere nach einem der Ansprüche 1 bis 6, die eine Vorderscheibe (23) umfasst, die sich vor dem Anzeigebildschirm (7) befindet und mit dem einen oder anderen verbunden ist, wobei die Vorderscheibe (23) mit dem Anzeigebildschirm beweglich gelagert ist.

9. Langgestreckte Barriere (10), die auf einem Träger (5) errichtet ist, der horizontal ist, wie beispielsweise eine Plattform (5) einer Station, wo ein Transportfahrzeug (25) vorbeifährt, wobei sich die Barriere (10) zwischen einer zugänglichen Vorderseite und einer unzugänglichen Hinterseite erhebt und auf ihrer Länge Folgendes umfasst:
- mindestens einen beweglichen Türflügel (27a, 27b) zum Öffnen und Schließen eines Durchgangs (29) an dieser Stelle zwischen der zugänglichen Vorder- und der unzugänglichen Hinterseite,
- mindestens einen festen Block (31a, 31b), mit welchem der bewegliche Türflügel (27a, 27b) mechanisch verbunden ist und parallel zu welchem der Flügel gleitet, wobei der feste Block, der an den Flügel angrenzt, einen Raum (39) verschließt, wo mindestens eine von folgenden Komponenten (41) angeordnet ist: ein Motor zur Motorisierung des beweglichen Türflügels (27a, 27b), eine Antriebsvorrichtung des Flügels, die funktional zwischen den Motor und den Flügel eingefügt ist, eine Vorrichtung zur Ver- oder Entriegelung des Flügels in der offenen oder geschlossenen Position und ein Gleit-Endanschlag des beweglichen Türflügels (27a, 27b),
- mehrere elektronische Informationsanzeigestrukturen (1) umfassend:
- einen festen Abschnitt (3), der auf oder gegen einen Träger (5) errichtet zu befestigen ist,
- Befestigungsmittel (30, 31, 310) des festen Abschnitts, und
- mindestens einen Informationsanzeigebildschirm (7), der mit dem festen Abschnitt (3) verbunden ist und sich vor ihm erstreckt, wobei der Bildschirm eine sichtbare Anzeigevorderseite (7a) aufweist, **dadurch gekennzeichnet, dass** Beweglichkeitsmittel (9, 9a, 9b) zwischen dem festen Abschnitt und dem Anzeigebildschirm (7) eingefügt sind, um eine Bewegung des Anzeigebildschirms bezogen auf den festen Abschnitt (3) zwischen:
- einer geschlossenen Position des Anzeigebildschirms (7), vor oder gegen den festen Abschnitt, wobei diese geschlossene Position die operative Betriebsposition ist, in welcher der Bildschirm der Anzeigevorderseite (7a) von vor der Struktur sichtbar ist,
- und einer offenen Position des Anzeigebildschirms (7) zu erlauben, die einen Wartungszugang (57):
* hinter den Anzeigebildschirm (7),
* oder zu einer Hinterseite (7b) des Bildschirms erlaubt,
wobei sich die elektronischen Anzeigestrukturen (1) abseits von dem oder jedem Flügel befinden, und dessen Anzeigevorderseite (7a) vorzugsweise auf der zugänglichen Vorderseite sichtbar ist,
- ein festes Strukturgestell (33), zu dem der oder jeder feste Block (31a, 31b) gehört und das an jedem festen Abschnitt durch Befestigungsmittel (31, 310) des festen Abschnitts (3) befestigt ist, und
- Befestigungsmittel (30, 31) des Strukturgestells (33), die in dem Träger (5) befestigt sind.

10. Barriere nach einem der Ansprüche 1 bis 9, wobei das Strukturgestell (33) über die Länge errichtete Seitenpfosten (51) umfasst, zwischen zweien derer mindestens eine Anzeigestruktur (1), ein Anzeigebildschirm (7) eingefügt ist.

11. Barriere nach einem der Ansprüche 1 bis 10, wobei mindestens eine Informationsanzeigestruktur (1) vor dem Anzeigebildschirm (7) mindestens eine Verglasungsscheibe umfasst, durch welche die Informationen zu sehen sind.

12. Barriere nach einem der Ansprüche 1 bis 11, die entlang der Barriere (10), die auf dem Träger (5) errichtet ist, Stromversorgungskabel (53) umfasst, die mit den Anzeigebildschirmen (7) und/oder mindestens einer der Komponenten (17) verbunden sind, wobei die Kabel abseits von jedem Flügel (27a, 27b) und festen Block (31a, 31b) oder jeder Sicherheitstür (43a, 43b) in den Träger (5) hineingehen, oder in den hohlen Pfosten (132a) des Rahmens, wo eine Schwenkachse (451) einer derartigen Tür entlangläuft.

13. Barriere nach einem der Ansprüche 1 bis 12, die die ganze Länge einer Stationsplattform (5) einnimmt, wo ein Transportfahrzeug (25) vorbeifährt, und die Folgendes umfasst:
- zwei erste Anordnungen erster und zweiter fester Blöcke (31a, 31b) (oder Sicherheitstüren (43a, 43b), die sich entlang der Barriere (10) erstrecken, und
- zwei zweite Anordnungen erster und zweiter beweglicher Türflügel (27a, 27b),
- wobei die Anzeigebildschirme (7) wie folgt aufgeteilt sind:
* bei einigen in eine Gruppe von Bildschirmen (70), die Seite an Seite angeordnet sind, hin zum mittleren Abschnitt der Länge der Plattform (5) zwischen den zwei zweiten Anordnungen erster und zweiter beweglicher Türflügel,
* bei anderen einzeln, seitlicher entlang der Plattform (5) angeordnet.

14. Barriere nach Anspruch 13, wobei die Gruppe von Bildschirmen (70), die Seite an Seite hin zum mittleren Abschnitt der Länge der Plattform (5) angeordnet sind, entlang der Länge der Barriere (10) eine Länge größer als die Länge jeder zweiten Anordnung aufweist.

15. Barriere nach einem der Ansprüche 1 bis 14, wobei vor und der Abstand jedes Anzeigebildschirms (7) die Anzeigestruktur (15) entlang der Barriere (10) eine einzige Scheibe (111) in der Richtung ihrer Dicke umfasst.

16. Barriere nach einem der Ansprüche 9 bis 12 oder 15, wobei:
- der oder jeder feste Block (31a, 31b) entlang der Barriere (10) eine freie Fläche (310) angrenzend an den Raum (39) aufweist, um die Komponenten (17) aufzunehmen, und die verglast und transparent sein könnte, und
- die Anzeigevorderseite (7a) zumindest bestimmter der Informationsanzeigebildschirme (7) größer als die freie Fläche ist, so dass die Anzeigebildschirme abseits des oder der festen Blöcke (31a, 31b) implantiert sind.

17. Barriere nach Anspruch 1 oder 10, 11, wobei mindestens eine der Sicherheitstüren (43a, 43b) mit einer elektronischen Informationsanzeigestruktur (1) nach einem der Ansprüche 1 bis 8 ausgerüstet ist, die mit einem Informationsanzeigebildschirm (7) versehen ist.

18. Barriere nach einem der Ansprüche 1 bis 17, umfassend:
- Befestigungsmittel (310, 451) zwischen dem Strukturgestell (33) und dem festen Abschnitt (3), umfassend:
-- lösbare Befestigungsmittel (310) zwischen dem Strukturgestell (33) und dem festen Abschnitt (3),
-- Mittel (451) zum Schwenken des festen Abschnitts (3) auf dem Strukturgestell (33) und
- Verriegelungsmittel (453) zur selektiven Ver- und Entriegelung der lösbaren Befestigungsmittel (310).

19. Barriere nach den Ansprüchen 1 und 18, wobei das Antipanikstangensystem (45) funktional mit den lösbaren Befestigungsmitteln (310) zwischen dem Strukturgestell (33) und dem festen Abschnitt (3) verbunden ist, der durch die Sicherheitstür (43a, 43b) definiert ist, damit sich die Sicherheitstür selbst in verriegelter Position der Verriegelungsmittel (453) unter einem Druck, der auf die Antipanikstange (45) ausgeübt wird, öffnen kann, wobei zumindest die eine der Informationsanzeigestrukturen zumindest an der einen der Sicherheitstüren (43a, 43b) befestigt ist.

20. Station, wo ein Transportfahrzeug (25) vorbeifährt, wobei die Station eine Plattform (5) aufweist und Zugänge (57) zur Plattform (5) für Passagiere aufweist, die in der Station zum Fahrzeug gelangen möchten, wobei sich jeder Zugang gemäß einer Achse (57a, 57b) erstreckt, die Station umfassend, entlang der Plattform, eine Barriere (10) nach einem der Ansprüche 1 bis 17, wobei die Anzeigebildschirme (7) wie folgt aufgeteilt sind:
- bei einigen in eine Gruppe von Bildschirmen (70), die Seite an Seite angeordnet sind, hin zum mittleren Abschnitt der Länge der Plattform (5) zwischen zwei Gruppen von beweglichen Flügeln (127a, 27b) und festen Blöcken (31a, 31b),
- bei anderen einzeln, seitlicher entlang der Plattform (5) angeordnet, wobei die Gruppe(n) von Bildschirmen (70), die Seite an Seite angeordnet sind, bezogen auf die Achse (57a, 57b) jedes Zugangs (57) seitlich versetzt sind.

21. Station, wo ein Transportfahrzeug (25) vorbeifährt, wobei die Station eine Plattform (5) aufweist und Zugänge (57) zur Plattform für Passagiere aufweist, die in der Station zum Fahrzeug gelangen möchten, wobei sich jeder Zugang gemäß einer Achse (57a, 57b) erstreckt, die Station umfassend, entlang der Plattform, eine Barriere (10) nach einem der Ansprüche 1 bis 17, wobei die Anzeigebildschirme (7) vorzugsweise wie folgt aufgeteilt sind:
- bei ersten in eine Gruppe von Bildschirmen (70), die Seite an Seite angeordnet sind, hin zum mittleren Abschnitt der Länge der Plattform (5) zwischen zwei Gruppen von beweglichen Flügeln (27a, 27b),
- bei zweiten einzeln, seitlicher entlang der Plattform (5) angeordnet als die ersten, wobei zumindest bestimmte der Anzeigestrukturen dieser zweiten Anzeigebildschirme (7) ferner mit interaktiven Betriebsmitteln (59, 63) versehen sind, die mit Verarbeitungsmitteln (61) verbunden sind, die entfernt gelegen sind, um eine Mensch-Maschine-Interaktivität zu erlauben, die es einem Benutzer, der sich vor dem einen dieser zweiten Bildschirme befindet, zu erlauben, über die interaktiven Betriebsmittel eine Anforderung zu den Verarbeitungsmitteln (61) zu übertragen und auf den zweiten Anzeigebildschirmen (7) eine Informationsrückmeldung zu erhalten.

## Claims

1. An elongate barrier (10) erected on a horizontal platform support where a transport vehicle (25) passes, the barrier (10) standing between an accessible front side and an inaccessible rear side and comprising along its length:
- at least one movable door leaf (27a, 27b) in order to open and close a passage (29) between the accessible front and inaccessible rear sides,
- at least one safety door (43a, 43b) equipped with an anti-panic bar system (45) and mounted so as to be movable on a stationary surround (46), the safety door laterally bordering the movable door leaf (27a, 27b) which slides parallel thereto,
- several electronic information display structures (1) comprising:
- a stationary part (3) to be secured upright on or against a support (5),
- securing means (30, 31, 310) for securing the stationary part, and
- at least one information display screen (7) connected to the stationary part (3) and extending in front of same, said screen having a visible front display face (7a), **characterized in that** mobility means (9, 9a, 9b) are disposed between the stationary part and the display screen (7), in order to permit a movement of the display screen with respect to the stationary part (3) between:
- a closed position of the display screen (7), with same positioned in front of or against said stationary part, this closed position being the operational position in which said screen of the front display face (7a) is visible from in front of the structure,
- and an opened position of the display screen (7), allowing access (57) for maintenance:
* behind the display screen (7),
* or to a rear face (7b) of said screen said electronic information display structures (1) being situated at a distance from the or each leaf (27a, 27b) and of which the front display face (7a) is preferably visible on the accessible front side,
- a stationary structural framework (33) to which belongs the or each stationary surround (46) and which is fixed to each stationary part (3) by securing means (30, 31) for securing the stationary part, and
- means (30, 31) for securing the structural framework (33), which are fixed in the support (5).

2. The elongate barrier as claimed in claim 1, in which the stationary part (3) comprises:
- a stationary framework (13) to be fixed to the support (5) by at least some of the securing means (30, 31), and
- a solid or substantially solid block (130) fixed to the stationary framework (13) by second securing means (31) and closing the rear of the screen (7) or of the display structure (1), in said closed position.

3. The elongate barrier as claimed in claim 2, in which the solid block (130) and the stationary framework (13) together comprise a solid or substantially solid panel (131) and a frame (132) which at least partially surrounds it, the mobility means (9, 9a, 9b) being disposed between the frame and the display screen (7).

4. The elongate barrier as claimed in one of claims 1 through 3, which comprises a movable peripheral structure (15) to which is fixed the display screen (7) and which preferably carries some of the mobility means (9, 9a, 9b).

5. The elongate barrier as claimed in one of claims 1 through 4, in which the mobility means (9, 9a, 9b) comprise hinges (48) disposed vertically, locally along the stationary part (3) and one of the lateral sides of said movable peripheral structure (15).

6. The elongate barrier as claimed in claim 4 or 5, which comprises electrical or electronic components (17) for operating the display screen (7), at least some of which components (17), with the display screen, are connected to said movable peripheral structure (15) so as to be movable with the latter.

7. The elongate barrier as claimed in one of claims 1 through 5:
- which comprises electrical or electronic components (17) for operating the display screen (7), which components (17) are fixed to the stationary part (3),
- and in which the display screen (7) is a touchscreen in front of which a pane (111) of facade (11) is movable with respect to the stationary part (3), preferably without another pane in front of the screen (7), the opening of the pane giving access to the components (17).

8. The elongate barrier as claimed in one of claims 1 through 6, which comprises a front pane (23) situated in front of the display screen (7) and connected to one or the other, the front pane (23) being mounted so as to be movable with the display screen.

9. An elongate barrier (10) erected on a support (5) which is horizontal, such as a station platform (5) where a transport vehicle (25) passes, the barrier (10) standing between an accessible front side and an inaccessible rear side and comprising along its length:
- at least one movable door leaf (27a, 27b) in order to open and close a passage (29), at this location, between the accessible front and inaccessible rear sides,
- at least one stationary block (31a, 31b) to which the movable door frame (27a, 27b) is connected mechanically and in parallel with which said leaf slides, the stationary block, which is adjacent to the leaf, enclosing a space (39) in which is disposed at least one of the following components (41): a motor for motorizing the movable door leaf (27a, 27b), a leaf drive device positioned functionally between the motor and the leaf, a device for locking or unlocking the leaf in an opened or closed position, and an end-of-travel abutment for the sliding of the movable door leaf (27a, 27b),
- several electronic information display structures (1) comprising:
- a stationary part (3) to be secured upright on or against a support (5),
- securing means (30, 31, 310) for securing the stationary part, and
- at least one information display screen (7) connected to the stationary part (3) and extending in front of same, said screen having a visible front display face (7a), **characterized in that** mobility means (9, 9a, 9b) are disposed between the stationary part and the display screen (7), in order to permit a movement of the display screen with respect to the stationary part (3) between:
- a closed position of the display screen (7), with same positioned in front of or against said stationary part, this closed position being the operational position in which said screen of the front display face (7a) is visible from in front of the structure,
- and an opened position of the display screen (7), allowing access (57) for maintenance:
* behind the display screen (7),
* or to a rear face (7b) of said screen said electronic information display structures (1) being situated at a distance from the or each leaf (27a, 27b) and of which the front display face (7a) is preferably visible on the accessible front side,
- a stationary structural framework (33) to which belongs the or each stationary surround (46) and which is fixed to each stationary part (3) by securing means (30, 31) for securing the stationary part (3), and
- means (30, 31) for securing the structural framework (33), which are fixed in the support (5).

10. The barrier as claimed in claim 1 through 9, in which, along its length, the structural framework (33) comprises upright lateral posts (51), between two of which is disposed at least one said display structure (1), a said display screen (7.

11. The barrier as claimed in one of claims 1 through 10, in which at least one said display structure (1) comprises, in front of the display screen (7), at least one glazed panel through which the information is seen.

12. The barrier as claimed in one of claims 1 through 11, which comprises, along the barrier (10) erected on the support (5), electricity supply cables (53) which are connected to said display screens (7) and/or to at least one of said components (17), the cables passing through the support (5), at a distance from each leaf (27a, 27b) and stationary block (31a, 31b) or safety door (43a, 43b), or through the hollow post (132a) of the frame where a shaft (451) for pivoting such a door passes.

13. The barrier as claimed in one of claims 1 through 12, which occupies the entire length of a station platform (5) where a transport vehicle (25) passes and which comprises:
- two first sets of first and second stationary blocks (31a, 31b) or safety doors (43a, 43b) extending along the barrier (10), and
- two second sets of first and second movable door leaves (27a, 27b),
- with the display screens (7) distributed:
* on the one hand, in screen groups (70) disposed side by side, toward the central part of the length of the platform (5), between the two second sets of first and second movable door leaves,
* on the other hand, disposed individually, more laterally along the platform (5).

14. The barrier as claimed in claim 13, in which the screen group (70) disposed side by side toward the central part of the length of the platform (5) has, along the length of the barrier (10), a length greater than the length of each second set.

15. The barrier as claimed in one of claims 1 through 14, in which, in front of and at a distance from each display screen (7), the display structure (15) comprises, along the barrier (10), a single pane (111) in the direction of its thickness.

16. The barrier as claimed in one of claims 9 through 12 or 15, in which:
- the or each stationary block (31a, 31b) has, along the barrier (10), a free surface (310) which is adjacent to said space (39) for housing the components (17), and which could be glazed and transparent, and
- the front display face (7a) of at least some of the information display screens (7) is larger than said free surface, such that the display screens are sited at a distance from the one or more stationary blocks (31a, 31b) .

17. The barrier as claimed in claim 1 or 10, 11, in which at least one of the safety doors (43a, 43b) is equipped with an electronic information display structure (1) as claimed in one of claims 1 through 8 provided with a said information display screen (7).

18. The barrier as claimed in one of claims 1 through 17, comprising:
- securing means (310, 451) between the structural framework (33) and the stationary part (3), comprising:
-- means (310) for releasable securing between the structural framework (33) and the stationary part (3),
-- means (451) for pivoting the stationary part (3) on the structural framework (33), and
- locking means (453) for selectively locking and unlocking the releasable securing means (310).

19. The barrier as claimed in claims 1 through 18, in which the anti-panic bar system (45) is connected functionally to the releasable securing means (310) between the structural framework (33) and said stationary part (3), which is defined by the safety door (43a, 43b), such that said safety door can open even in the locked position of the locking means (453) when a push is exerted on the anti-panic bar (45), at least one of the information display structures being fixed to at least one of the safety doors (43a, 43b).

20. A station through which a transport vehicle (25) passes, the station having a platform (5) and providing accesses (57) to the platform (5) for passengers wishing to access the vehicle in the station, each access extending along an axis (57a, 57b), the station comprising, along the platform, a barrier (10) as claimed in one of claims 1 through 17, the display screens (7) being distributed:
- on the one hand, in screen groups (70) disposed side by side, toward the central part of the length of the platform (5), between the two groups of movable leaves (127a, 127b) and stationary blocks (31a, 31b),
- on the other hand, disposed individually, more laterally along the platform (5), the screen groups (70) disposed side by side being offset laterally with respect to the axis (57a, 57b) of each access (57).

21. A station through which a transport vehicle (25) passes, the station having a platform (5) and providing accesses (57) to the platform for passengers wishing to access the vehicle in the station, each access extending along an axis (57a, 57b), the station comprising, along the platform, a barrier (10) as claimed in one of claims 1 through 17, the display screens (7) preferably being distributed:
- on the one hand, in screen groups (70) disposed side by side, toward the central part of the length of the platform (5), between the two groups of movable leaves (27a, 27b),
- on the other hand, disposed individually, more laterally along the platform (5) than the first ones, at least some of the display structures of these second display screens (7) being additionally provided with interactive operating means (59, 63) connected to remotely situated processing means (61) for permitting man-machine interaction which allows a user situated in front of one of these second screens to transmit a request to the processing means (61), via the interactive operating means, and to obtain a return of information on said second display screens (7).
